# EUROPEAN PATENT APPLICATION

(11) **EP 2 517 608 A1**
(43) Date of publication of application: **31.10.2012**
(21) Application number: 12002750.3
(22) Date of filing: 19.04.2012
(51) Int. Cl.: A47C 31/12

(54) **Seating pad accessory**

(30) Priority: 26.04.2011 US 201161479152 P; 14.10.2011 US 201113273694
(71) Applicant: Nightgear LLC, New York, NY 10016 (US)
(72) Inventor: Leeds, Richard, M., New York, NY 10016 (US)
(74) Representative: Müller-Boré & Partner Patentanwälte

(57) **Abstract**

A pad assembly for a child has arms that can wrap around the child and that can be connected to one another to facilitate carrying the pad in a rolled condition.

## Description

### BACKGROUND OF THE INVENTION

1. Field of the Invention: This invention relates to a portable accessory for a seat.

2. Description of the Related Art. Travel on transportation vehicles, such as planes, trains, buses, cars or trucks is rarely comfortable and can be extremely uncomfortable on long trips. Many travelers become extremely uncomfortable after an hour or two on transportation seats, especially those seats that are intended for trips of a short duration. More comfortable seats occasionally are provided on planes making longer trips, specifically in business class and first class. These seats are often wider and recline farther than a typical transportation seat. However, even these upgraded seats become uncomfortable on longer trips.

Intercontinental flights often last in excess of twelve hours. Many business travelers often fly through the night to arrive at their destination and are expected to be alert and functioning for business meetings as soon as they arrive. Hence, it is important that a business traveler is well-rested when he arrives at his destination. This is often impossible in the typical airplane seat.

In addition to comfort considerations, many travelers are concerned with the cleanliness of their transportation seat. Typically, an airplane will make several flights before it is thoroughly cleaned. Travelers rarely know who used a transportation seat before them and whether that person is hygienic and healthy. This is a particular concern on intercontinental flights where a traveler is concerned about becoming ill in a foreign country. In addition to contamination concerns, a traveler may worry about the health of the previous occupant of his or her seat through the duration of the flight and whether the previous occupant had a contagious illness.

For at least the foregoing reasons, it is desirable to have a seating pad assembly to increase the comfort of a seat and to create a barrier between the occupant and the surface of the seat. Such a seating pad assembly is provided in US Patent No. 7,461,894, the entire disclosure of which is incorporated herein by reference. The seating pad assembly disclosed in US Patent No. 7,461,894 comprises a cushion formed from a viscoelastic foam and is dimensioned to conform to the dimensions of a travel seat. The seating pad assembly of US Patent No. 7,461,894 also has straps for keeping the pad in a coiled position and a cover with a shoulder carrying strap. While the seating pad assembly disclosed in US Patent No. 7,461,894 provides comfort to a passenger, it can be difficult to carry absent the cover and shoulder strap.

The prior art seating pad assembly shown in US Patent No. 7,461,894 was designed in view of adult travelers, such as business travelers making long trips. Obviously, long trips are not limited to adults or to business travelers. Many families with children make long trips by plane, train, bus or car. Confining a small child to a vehicle seat for a long trip can be draining for a parent and fellow passengers. Hence, entertaining the child and keeping him or her comfortable is of the utmost concern.

At home, children are often kept busy with an endless supply of toys, stuffed animals and videos. The toys and animals often have a theme associated with television show or movie Travel restrictions make it difficult for a parent to pack enough toys in their carry-on bags to keep their child busy for a long trip. Additionally, a young child will quickly begin to "squirm" in a seat on a car, plane, train or bus. Thus, it would be desirable to have a seating pad assembly that is comfortable and provides entertainment for children. Further, it is preferable to have a seating pad assembly that can be carried by a child so as not to run afoul of carry-on luggage restrictions.

In view of the above, it is an object of the invention to provide a seating accessory that can be used and carried by a child.

It is a further object of the invention to provide a seating accessory with a shoulder strap.

It is a still further object of the invention to provide a seating accessory that provides entertainment for children.

### SUMMARY OF THE INVENTION

The invention relates to a seating accessory for use primarily with a transportation seat, such as a seat on an airplane, a train, a bus or a car. The invention also relates to a strap assembly connected directly to the seating accessory.

The seating accessory includes pad assembly that may be generally rectangular and preferably has a width corresponding approximately to the width of the seat. The width of the seat, and hence the pad assembly is likely to vary in accordance with the mode and class of travel. For example, a seat for economy airline travel typically is about sixteen inches wide, while a seat for business or first class airline travel typically is about twenty inches wide. A car seat for a child typically is less than sixteen inches wide. The pad assembly has a width approximately equal to the width of the intended seat. The seating pad assembly also preferably has a length approximately equal to the length of the hip/thigh support plus at least part of the length of the back support. Specifically, a seating pad assembly intended for an adult in an economy class airline seat preferably should be about 42 inches long to cover the hip/thigh support and at least the part of the back support that will abut the traveler. The seating pad assembly for an adult in a business or first class seat preferably is about 60 inches long to cover the hip/thigh support and at least the part of the back support that will abut the traveler. Additionally, the seating pad assembly may include a foot rest extension with a length approximately equal to the length of the foot rest on the public transit seat. Of course, the pad assembly need not extend the full length of the back of the traveler, and a pad assembly sufficient to cover the lumbar region of the back may be acceptable for many travelers. Furthermore, a pad assembly for children can be considerably shorter than the 42 inches recommended above for airline economy class seats. The seating pad assembly preferably has a thickness of between 1.0-2.0 inch, and most preferably about 1.00 inch.

The seating pad assembly comprises a substantially rectangular cushion of resilient elastic material. A viscoelastic cushion is the preferred material described in the above-reference US Patent No. 7,461,894 in view of the unique ability of the viscoelastic material to conform to the shape of the seat and the passenger. However, viscoelastic foams are fairly expensive and the unique supporting and conforming characteristics of viscoelastic foams may not be necessary for a child. Thus, the cushion for a child can be made from a less expensive material, such as conventional foam rubber, micro beads or a fiberfill material that may be made of polyester, PETE, PLA or other materials that are used for stuffed toys and pillows. The pad preferably has width, length and thickness dimensions corresponding to the overall width, length and thickness dimensions for the assembly, as set forth above. Additionally, the cushion preferably has a density and hardness to support a young traveler comfortably across all locations on the seat, including across the seams, gaps and other pinch points between adjacent movable parts of the seat, including those that are at least 1 cm across and at least 1 cm deep. In this regard, the density, hardness, resiliency and thickness of the cushion desirably are selected so that lower areas of the cushion will flow into and conform to the gaps and other pinch points, thereby creating a substantially smooth surface for supporting the young traveler. Furthermore, these density, hardness, resiliency and thickness characteristics of the cushion desirably are selected to ensure that the weight of the young traveler will be distributed and supported by upper parts of the cushion without a bottoming out that would occur if the cushion was deformed maximally. Thus, the cushion preferably isolates the young traveler from the bothersome pinch points.

The seating pad assembly further includes a cover mounted over the cushioning material. At least a portion of the cover preferably is removable for laundering or replacement. The cover may include an inner screen layer preferably formed from a synthetic material, such as nylon that contributes to the protection and support of the cushioning material. The inner screen layer need not be removable. The cover may also include an inner protective cover that may be fluid resistant, stain resistant, antimicrobial and/or moisture wicking. The inner protective cover prevents permanent damage to the cushioning material. Preferably, the inner cover has a zipper or other closure means to permit the inner cover to be removed from the cushioning for laundering or replacement. The cover also includes an outer cover that preferably is formed from a material that is fluid resistant, stain resistant antimicrobial and moisture wicking. Additionally, the outer cover is formed from a material that will be comfortable to the passenger. The outer cover may be imprinted, embroidered or otherwise applied with a design, and particularly a design that is appealing to children. For example the outer cover may have a design resembling an animal, a cartoon character, a toy, or a celebrity. Additionally, the outer cover may include extensions to represent ears, horns, legs or the like of the character that is printed, embroidered or otherwise applied on the outer cover The outer cover also has a zipper or other closure means to permit the outer cover to be removed for laundering or replacement. The closure for the outer cover may be offset from the closure for the inner cover. The outer cover also may include a strap for releasably securing the seating pad assembly in a rolled condition for easy storage and carrying through an airport or other transit terminal.

The seating pad assembly further has top and bottom ends and left and right sides between the top and bottom ends. Left and right arms extend from the respective left and right sides at a position between the top and bottom ends. Each arm has an elongated outer tube of a specified width that preferably is formed from the same material as the outer cover. The tube is filed with a cushioning material, such as micro beads or fiberfill, as described above. The left and right arms each have a distal end remote from the left and right sides of the pad. Distal end regions of the arms are wider than the specified width at more proximal positions on the arms. The distal end regions of the arms may have multiple substantially cylindrical protuberances in the shape of fingers to impart the appearance of hands with fingers extending from the hands of the arms. The distal end may also be in the form of claws or paws and may correspond to the design of the cover. At least one of the left and right arms has a connector near the distal end region. The connector preferably is an elastic strip secured to a portion of the arm. The elasticity of the connector is sufficient to allow the distal end region, or hand of the other of the left and right arms to pass through the space between the elastic strip and the arm to be secured so that the first and second arms form a closed loop that can function as a shoulder strap. Additionally, the arms may be connected with the connector while the seating pad is in use to give a child the feeling of being hugged.

The seating pad assembly may include means for releasable attachment to the public transportation seat. For example, a snapped attachment can be provided for releasable engagement with snaps provided on the top of the seat back. In other situations, the seating pad assembly may be provided with notches or apertures for receiving a seat belt.

The seating pad assembly may further include or may be used with a carrying bag. The carrying bag has a selectively closable end. The selectively closable end may have a flap, a draw string or the like. The carrying bag may further include a strap or a loop to facilitate mounting and transportation of the bag and seating pad assembly on a rolling piece of luggage. However, a separated carrying bag is not likely to be needed in view of the arms that function as a carrying strap.

The seating pad assembly can be transported to an airport, train station or the like by a passenger and can be one of the pieces of carry-on luggage transported by the passenger. The seating pad assembly can be stored in an overhead compartment for part of a trip, if desired. However, the seating pad assembly can be removed when the passenger desires more comfort or is ready to sleep. Of course, the seating pad assembly can and often will be used for the entire trip. The seating pad assembly is used merely by positioning the seating pad assembly on the seat. The passenger then can assume a normal sitting posture to hold the pad in place. Controls on the seat can be utilized to move the seat into a reclined condition if appropriate or possible for the particular transportation vehicle. The seating pad assembly will extend continuously across seams and/or creases between the movable parts of the seat to maximize comfort. Additionally, the pad can be dimensioned to provide lateral support between the passenger and arm rests.

### BRIEF DESCRIPTION OF THE DRAWINGS

FIG. 1 is a top plan view of a seating pad assembly in an unfurled state.

FIG. 2 is a top plan view of the seating pad assembly in a coiled state.

FIG. 3 is a side elevational of the seating pad assembly in a coiled state as viewed from the left side.

FIG. 4 is a perspective view of the seating pad assembly in a coiled state showing the shoulder strap in use.

FIG. 5 is a perspective view of the seating pad assembly attached to a transportation seat.

FIG. 6 is a perspective view, partly in section, of a seating pad assembly in accordance with the invention.

### DETAILED DESCRIPTION OF THE PREFERRED EMBODIMENT

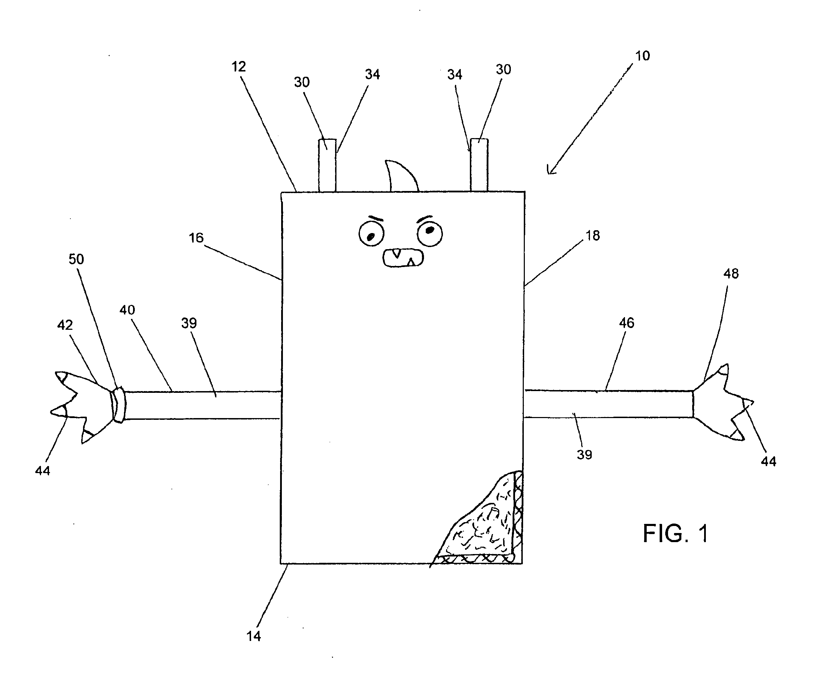

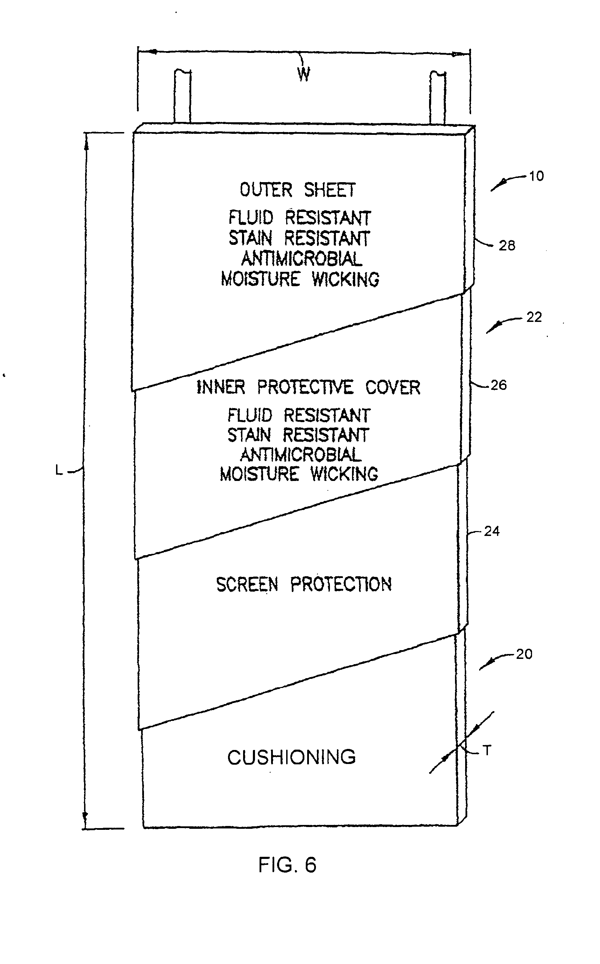

A seating pad assembly in accordance with the subject invention is identified generally by the numeral 10 in FIGS. 1 through 5. The seating pad assembly 10 includes an inner cushioning 20 that may be formed from a foam rubber, micro bead, fiberfill or viscoelastic material, such as those that are available from several commercial sources, including TEMPUR-PEDIC. The seating pad assembly 10 is generally rectangular and has opposite top and bottom ends 12 and 14 that define a length L and opposite left and right sides 16 and 18 that define a width W, as shown in FIG. 1. The length and width dimensions L and W will vary in accordance with the seat for which the seating pad assembly 10 is being marketed. In particular, first or business class airline seats often are wider than economy class airline seat and both are wider that automobile car seats used by children. Furthermore, some public transportation seats include footrests that extend longitudinally as the seat is reclined. In a preferred embodiment, the seating pad assembly 10 has a width W of approximately 16 inches for economy class seats, approximately 20 inches for business or first class seats and less than 16 inches for child car seats. These widths enable the pad 10 to occupy a major portion of the width "w" of the targeted seat. However, other seating pad assemblies 10 may be slightly narrower or slightly wider. The length L of the seating pad assembly 10 also will vary in accordance with the mode or class of travel for which the seating pad assembly 10 is purchased and marketed. In a preferred embodiment, the seating pad assembly 10 has a length L of approximately 42 inches for economy class airline seats, a length L of approximately 46 inches for business class airline seats and a length L of approximately 60 inches for first class airline seats. Seating pad assembly intended for child seats used in a car may be considerably shorter, such as about 24 inches. The cushioning material 20 of the seating pad assembly 10 has a thickness "T" as shown in FIG. 6. The thickness "T" preferably is in the range of 1.0-1.5 inch, and most preferably is approximately 1.0 inch to facilitate storage and carrying. However, the ability of the inner cushion 20 to be transported easily and to provide the necessary comfort for long distance travel also depends on the density of the cushioning material. A viscoelastic foam with a density of 3 lbs/cubic foot to 8 lbs/per cubic foot and a thickness T of 1.0-1.5 inch has been found to provide comfortable support for an adult across gaps and other surface discontinuities of the prior art airline seat while still being easily transportable. However, a viscoelastic inner cushion 20 with a density of 5 lbs/cubic foot and a thickness T of 1.0 inch has been found to provide very good levels of comfort and very desirable storage and carrying characteristics for an adult, as explained herein. The preferred embodiment is not intended for adults, but rather is intended for children. Hence, a fairly expensive viscoelastic material may not be necessary in view of the lighter weight of the child, and the above described inexpensive foam rubber, micro beads or fiberfill may be sufficient.

The seating pad assembly 10 further includes a cover assembly 22 that substantially completely encloses the cushioning material 20. In this regard, the cushioning material 20 is not comfortable for direct long term contact by the traveler. Additionally, most cushioning material 20 is not well suited for soil or stain resistance and could become unsightly after several uses. Furthermore, most cushioning materials are not aesthetically attractive even when clean. The cover assembly 22, on the other hand, can be made from relatively inexpensive materials that are comfortable for direct long term contact by the traveler.

The cover assembly 22 may include an inner screen layer 24 that completely surrounds the cushioning material 20. The inner screen layer 24 preferably is a thin gauge mesh formed from synthetic fibers, such as nylon, that will protect the cushioning material 20 when other parts of the cover assembly 22 are removed for cleaning, maintenance or replacement.

The cover assembly 22 may further include an inner cover 26 removably mounted over the inner screen layer 24 and the cushioning material 20. The inner cover 26 may be formed from a fluid resistant, stain resistant material with moisture wicking and antimicrobial characteristics such as a knitted fabric made from a blend of cotton and synthetic fabric. Additionally, the inner cover 26 includes an inner closure, such as a zipper, that extends across one end edge and adjacent side edges of the inner cover 26. The inner closure enables the inner cover 26 to be separated from the cushioning material 20 for cleaning, maintenance or replacement.

The cover assembly 22 further includes an outer cover 28 that is removably mounted over cushioning material 20 and any inner cover that may be provided. The outer cover 28 is formed from a fluid resistant, stain resistant material with moisture wicking and antimicrobial characteristics. For example, the outer cover 22 can be formed from a woven cotton fabric (300-1000 thread count), a brush knit fabric that is soft to the tough and comfortable even after a long term of contact or a plush polyester or fleece fabric made for example from polyester and with long fibers or high brush pile to resemble fur or hair. Furthermore, the outer cover 22 can be made aesthetically attractive and can be printed, embroidered or otherwise applied with indicia or a design. More particularly, the outer cover can bear the design of an animal, cartoon character, toy, or celebrity. For example, the illustrated embodiment has eyes, a mouth and a horn. Other embodiments can include ears, feet or wings at appropriate peripheral locations. In this way, the assembly 10 may be more attractive to children.

The outer cover 28 includes an outer closure, such as a zipper, that extends along a major part of one side edge of the outer cover 28. The outer closure enables the outer cover 28 to be separated from the cushioning material 20 and the inner cover 26 for cleaning, maintenance or replacement.

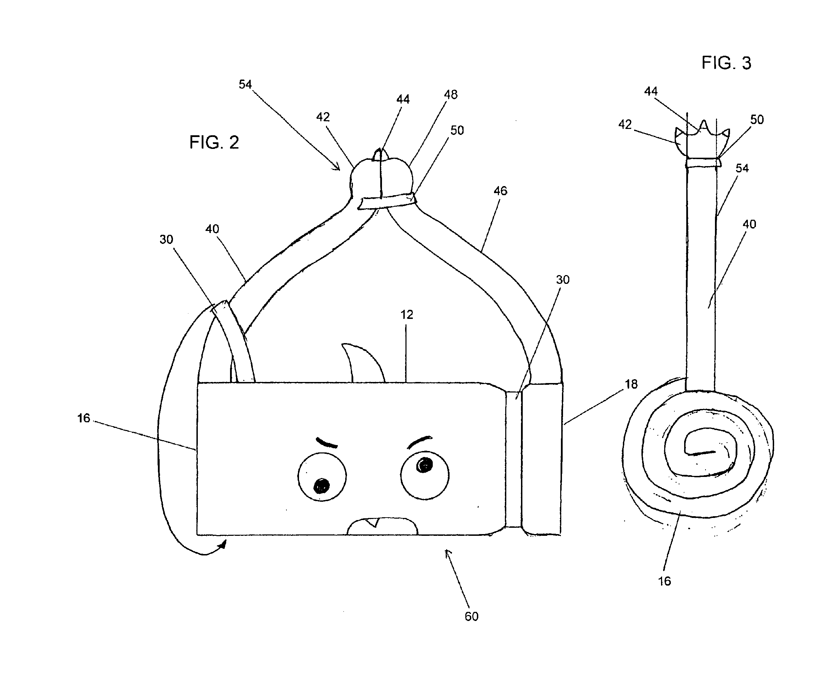

Two straps 30 are secured to portions of the outer cover 28 adjacent to the top end of the assembly. Portions of each strap 30 sewn or otherwise secured to the outer cover 28 while the free end of the strap may have a fastener that can be attached to a mating fastener affixed to the cover. In the preferred embodiment, the straps 30 have an elastic interior and an outer cover 34 aesthetically similar to the outer cover 28 of the assembly 10. The assembly may be rolled from the bottom end 12 towards the top end 14 to form a rolled coil 60 as shown in FIGS. 2 and 3, and the straps 30 may be used to retain the assembly in a tightly rolled condition.

The seating pad assembly 10 also has left and right substantially tubular arms 40, 46 extending out from the respective left and right sides 16, 18 at a position spaced from the top and bottom ends 12, 14. The arms 40, 46 have a flexible interior preferably made of micro beads or fiberfill and a tubular cover 39 aesthetically similar to or identical to the outer cover 28 of the pad assembly 10. The tubular cover 39 of each arm 40, 46 have a substantially constant first width for most of the length. However, the arms have distal ends 42, 48 remote from the left and right sides 16, 18 of the assembly. The distal ends 42, 48 define a second width that is larger than the first width. The distal ends 42, 48 can take many forms. In the preferred embodiment, as illustrated in FIG. 1, the leading ends 42, 48 are in the form of hands with fingers 44. The leading ends 42, 48 can also take the form of claws or paws and should correspond to other the design elements of the outer cover 22.

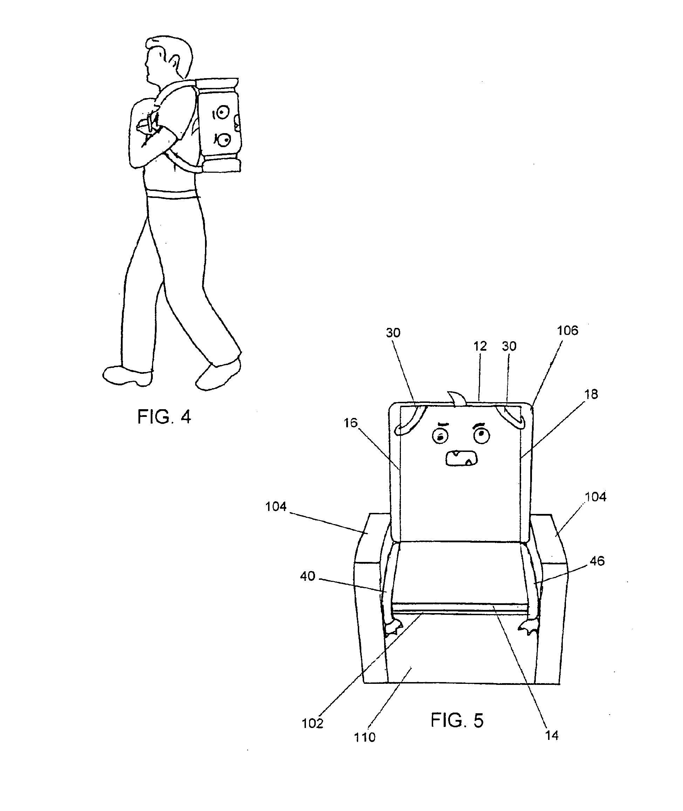

The right arm 40 has a connector 50 formed near the distal end 42. The connector 50 can take many forms. In the preferred embodiment, the connector 50 is an elastic loop having ends permanently attached to the right arm 40 near the distal end 42. When the assembly 10 is held in a rolled state by the straps 30, the left and right arms 40, 46 can be connected at the leading ends 42, 48 via the connector 50 to create a shoulder strap 54. More particularly, The elasticity of the preferred connector 50 is sufficient to allow the connector 50 on the right arm 40 to expand sufficiently around the opposite distal end 48 and then contract around the opposite arm 46 thereby creating the impression that the hands or paws are clasping one another, as shown in FIGS. 2 and 3. The distal ends 42, 48 are held in a looped state, thereby forming a shoulder carrying strap 54, as shown in FIG. 4. Additionally, the distal ends 42, 48 can be engaged while the assembly is deployed on a seat to create the impression that the arms 40, 46 are hugging a child sitting in the seat. The connector 50 is one example of structure for connecting the arms 40, 46. Hook and loop fasteners, snaps, buttons and the like also may be used.

The seating pad assembly 10 is used by removing by expanding the connector 50 to separate the connected distal ends 42, 48 from the connector 50. The straps 30 then are opened and the seating pad assembly 10 is unrolled from the FIG. 2 condition to the FIG. 1 condition. The open seating pad assembly 10 then is placed on a seat 100 substantially as shown in FIG. 5. More particularly, one longitudinal end the seating pad assembly 10 may be positioned near the top of the seat back support 106. The remainder of the seating pad assembly 10 extends from the top of the back support 106 across the gap 108 between the hip/thigh support 102 and the back support 106 and towards or to a leg rest 110. The straps 30 may be attached to the back support 106 to ensure stability of the seating pad assembly 10. The extent of the seating pad assembly 10 to or towards the leg rest 110 will depend upon the overall length L of the pad assembly 10 relative to the length "I" of the seat 100. In preferred embodiments, the seating pad assembly 10 will be sufficiently long to extend completely to the end of the leg rest 110 farthest from the hip/thigh support 102. As noted above, the width W of the seating pad assembly 10 preferably is in the range of 14-20 inches, and hence will fit conveniently between the armrests 104 of the seat 100 without creating potentially objectionable bulges or bumps.

While the invention has been described with respect to a preferred embodiment, it is apparent that various changes can made without departing from the scope of the invention as defined by the appended claims. In this regard, different length, width and thickness dimension can be provided in accordance with the preferences of the traveler and the dimensions of the seat.

A rectangular seating pad assembly 10 offers several cost efficiencies and carrying efficiencies. However, nonrectangular pads can be provided. For example, notches can be provided at areas where seat belts extend from the seat. Additionally, areas that will be adjacent the knees and lower legs can be narrower than areas adjacent the hips or shoulders.

Elastic straps 30 were illustrated in the preferred embodiment. However, other forms of straps, such as Velcro, can be provided for holding the pad assembly 10 in a rolled condition.

The pad assembly 10 may further be provided with structure for releasably affixing the pad assembly 10 to upper portions of the back support 106 of the seat 100. These attachments features can be straps, snaps or the like.

These variations and others will be apparent to persons skilled in this art after having read this disclosure.

## Claims

1. A body support pad assembly, comprising:
a resilient flexible pad having opposite front and rear surfaces, opposite top and bottom edges extending between the front and rear surfaces and opposite first and second side edges extending between the front and rear surfaces and the top and bottom edges;
first and second elongated arms extending out respectively from the first and second edges of the pad, the first and second arms each having a length greater than one half a distance between the first and second side edges of the pad; and
attachment means provided on at least the first arm at a location spaced from the pad for connecting the first and second arms to one another at locations spaced from the pad.

2. The body support pad assembly of claim 1, further comprising first and second hands connected respectively to locations on the first and second arms remote from the pad.

3. The body support pad assembly of claim 2, wherein each of the arms has a width measured perpendicular to an extending direction of the respective arm, each of the hands having a width greater than the width of the corresponding arm.

4. The body support pad assembly of claims 2 or 3, wherein the attachment means comprises an elastic loop on the first arm at a position substantially adjacent the first hand and configured for releasably engaging a portion of the second arm substantially adjacent the second hand.

5. The body support pad assembly of any of claims 1-4, further comprising at least one strap extending from at least one of the top and bottom edges of the pad for holding the pad in a rolled condition.

6. The body support pad assembly of any of claims 1-5, further comprising facial indicia on the top surface of the pad.

7. The body support pad assembly of any of claims 1-6, wherein the pad comprises an inner cushion and an outer covering.

8. The body support pad assembly of claim 7, wherein the arms are connected to the outer covering of the pad.

9. The body support pad assembly of claims 7 or 8, wherein the covering is formed from a selected material, and wherein the arms comprise the selected material of the covering.

10. The body support pad assembly of any of claims 7-9, wherein the inner cushion comprises a foam material.

11. The body support pad assembly of claim 10, wherein the foam material is viscoelastic foam.

12. The body support pad assembly of any of claims 1-11, further comprising body appendages extending from at least one of the top and bottom edges.

13. The body support pad assembly of claim 12, wherein the body appendages comprise horns, ears or feet.

14. A child seat assembly, comprising:
a seat; and
the support pad assembly of any of claims 1-13 having a resilient pad with a rear surface positioned on the seat and a front surface opposite the rear surface, the pad having opposite first and second side edges and opposite first and second arms extending respectively from the first and second side edges of the pad, the arms having a combined length sufficiently long to wrap around a child sitting in the seat, at least one of the arms having attachment means at a location spaced from the pad for attaching the arms releasably to one another and for at least partly enveloping the child in the seat.
